# EUROPEAN PATENT APPLICATION

(11) **EP 4 730 850 A1**
(43) Date of publication of application: **22.04.2026**
(21) Application number: 23941035.0
(22) Date of filing: 14.06.2023
(51) Int. Cl.: H04W 8/14

(54) **COMMUNICATION PROCESSING METHOD AND APPARATUS**

(71) Applicant: Beijing Xiaomi Mobile Software Co., Ltd., Beijing 100085 (CN)
(72) Inventor: JIANG, Xiaowei, Beijing 100085 (CN)
(74) Representative: Gunzelmann, Rainer
(86) International application number: PCT/CN2023/100303
(87) International publication number: WO 2024/254798

(57) **Abstract**

The present disclosure relates to the technical field of communications. Provided are a communication processing method and apparatus. The method comprises: a terminal device sending Msg3 to a network device, wherein the Msg3 carries first information, which is used for indicating a Msg4 HARQ-ACK repetition request or a Msg4 HARQ-ACK repetition capability. By means of applying the technical solution of the present disclosure, a terminal device can indicate a Msg4 HARQ-ACK repetition request or a Msg4 HARQ-ACK repetition capability, such that a network device allocates corresponding resources in Msg4, and then multiple repetition transmissions of the terminal device for an HARQ-ACK of Msg4 are realized, thereby improving the coverage performance of an access network device of an NTN, and increasing the success rate of the terminal device accessing the NTN.

## Description

### FIELD

The present disclosure relates to the field of communication technologies, and more particularly to a communication processing method and apparatus.

### BACKGROUND

A non-terrestrial network (NTN) is different from a terrestrial network (TN). Since an access network device in the NTN network is far away from a terminal device, coverage performance of the access network device in the NTN network may be worse than that of the TN network, resulting in the terminal device being unable to access the NTN network.

### SUMMARY

The present disclosure provides a communication processing method and apparatus, which may realize that a terminal device indicates an Msg4 hybrid automatic repeat request-acknowledgment (HARQ-ACK) repetition request or an Msg4 HARQ-ACK repetition capability, enabling the network device to allocate corresponding resources in the Msg4, realizing multiple re-transmissions of the HARQ-ACK for the Msg4 by the terminal device, improving the coverage performance of the access network device in the NTN network and increasing the success rate of the terminal device accessing the NTN network.

Embodiments of a first aspect of the present disclosure provide a communication processing method, and the method includes transmitting an Msg3 carrying first information, in which the first information indicates an Msg4 HARQ-ACK repetition request or an Msg4 HARQ-ACK repetition capability.

In some embodiments of the present disclosure, the Msg3 does not carry a common control channel (CCCH) service data unit (SDU).

In some embodiments of the present disclosure, a physical uplink control channel (PUCCH) resource for transmitting the HARQ-ACK is not configured.

In some embodiments of the present disclosure, a measured downlink reference signal received power (RSRP) is lower than a configured RSRP threshold for Msg4 HARQ-ACK repetition, and the first information carried in Msg3 indicates the Msg4 HARQ-ACK repetition request.

In some embodiments of the present disclosure, the method further includes receiving a cell handover command, in which the cell handover command includes first configuration information, and the first configuration information indicates an RSRP threshold for the Msg4 HARQ-ACK repetition.

In some embodiments of the present disclosure, the method further includes receiving first signaling, in which the first signaling includes second configuration information, and the second configuration information indicates an RSRP threshold for the Msg4 HARQ-ACK repetition.

In some embodiments of the present disclosure, the method further includes receiving a system message, in which the system message includes third configuration information, and the third configuration information indicates an RSRP threshold for the Msg4 HARQ-ACK repetition.

In some embodiments of the present disclosure, an RSRP threshold for Msg4 HARQ-ACK repetition is not configured, and the Msg3 carries the first information indicating the Msg4 HARQ-ACK repetition capability.

In some embodiments of the present disclosure, a terminal device is in a radio resource control (RRC) inactive state or an RRC connected state.

In some embodiments of the present disclosure, the method further includes receiving second signaling, in which the second signaling includes second information, and the second information is used to determine whether the terminal device is allowed to indicate the Msg4 HARQ-ACK repetition request.

In some embodiments of the present disclosure, the method further includes transmitting capability indication information, in which the capability indication information includes whether the terminal device supports Msg4 HARQ-ACK repetition.

In some embodiments of the present disclosure, the method further includes not using the Msg3 to indicate capability information of whether supporting Msg4 HARQ-ACK repetition.

In some embodiments of the present disclosure, the first information is carried in a cell-radio network temporary identifier (C-RNTI) media access layer control element (MAC CE) in the Msg3.

In some embodiments of the present disclosure, the first information is carried in an MAC sub-header of the C-RNTI MAC CE.

In some embodiments of the present disclosure, a reserved bit in the MAC sub-header of the C-RNTI MAC CE is used to carry the first information.

In some embodiments of the present disclosure, a logical channel identifier (LCID) in the MAC sub-header of the C-RNTI MAC CE is used to carry the first information.

In some embodiments of the present disclosure, the method of embodiments of the first aspect is applied to random access triggered by beam failure recovery (BFR), random access triggered by a scheduling request (SR), random access triggered by small data transmission (SDT) in an inactive state, random access during cell handover, or random access during a secondary cell group (SCG) addition or change process.

Embodiments of a second aspect of the present disclosure provide a communication processing method, and the method includes receiving an Msg3 carrying first information, in which the first information indicates an Msg4 HARQ-ACK repetition request or an Msg4 HARQ-ACK repetition capability.

In some embodiments of the present disclosure, the Msg3 does not carry a CCCH SDU.

In some embodiments of the present disclosure, the PUCCH resource for transmitting the HARQ-ACK is not configured.

In some embodiments of the present disclosure, an RSRP measured by a terminal device is lower than a configured RSRP threshold for Msg4 HARQ-ACK repetition, and the first information carried in Msg3 indicates the Msg4 HARQ-ACK repetition request.

In some embodiments of the present disclosure, a cell handover command carries first configuration information, and the first configuration information indicates an RSRP threshold for the Msg4 HARQ-ACK repetition.

In some embodiments of the present disclosure, the method further includes transmitting first signaling, in which the first signaling includes second configuration information, and the second configuration information indicates an RSRP threshold for the Msg4 HARQ-ACK repetition.

In some embodiments of the present disclosure, the method further includes transmitting a system message, in which the system message includes third configuration information, and the third configuration information indicates an RSRP threshold for the Msg4 HARQ-ACK repetition.

In some embodiments of the present disclosure, an RSRP threshold for Msg4 HARQ-ACK repetition is not configured, and the Msg3 carries the first information indicating the Msg4 HARQ-ACK repetition capability.

In some embodiments of the present disclosure, the terminal device is in an RRC inactive state or an RRC connected state.

In some embodiments of the present disclosure, the method further includes: transmitting second signaling, in which the second signaling includes second information, and the second information is used to determine whether the terminal device is allowed to indicate the Msg4 HARQ-ACK repetition request.

In some embodiments of the present disclosure, the method further includes receiving capability indication information, in which the capability indication information includes whether the terminal device supports Msg4 HARQ-ACK repetition.

In some embodiments of the present disclosure, the terminal device does not use the Msg3 to indicate capability information of whether supporting Msg4 HARQ-ACK repetition.

In some embodiments of the present disclosure, the first information is carried in the C-RNTI MAC CE in the Msg3.

In some embodiments of the present disclosure, the first information is carried in an MAC sub-header of the C-RNTI MAC CE.

In some embodiments of the present disclosure, a reserved bit in the MAC sub-header of the C-RNTI MAC CE is used to carry the first information.

In some embodiments of the present disclosure, a logical channel identifier (LCID) in the MAC sub-header of the C-RNTI MAC CE is used to carry the first information.

In some embodiments of the present disclosure, the method of embodiments of the second aspect is applied to random access triggered by beam failure recovery (BFR), random access triggered by a scheduling request (SR), random access triggered by small data transmission (SDT) in an inactive state, random access during cell handover, or random access during a secondary cell group (SCG) addition or change process.

Embodiments of a third aspect of the present disclosure provide a communication processing apparatus, and the apparatus includes a first communication module configured to transmit an Msg3 carrying first information, in which the first information indicates an Msg4 HARQ-ACK repetition request or an Msg4 HARQ-ACK repetition capability.

Embodiments of a fourth aspect of the present disclosure provide a communication processing apparatus, and the apparatus includes a second communication module configured to receive an Msg3 carrying first information, in which the first information indicates an Msg4 HARQ-ACK repetition request or an Msg4 HARQ-ACK repetition capability.

Embodiments of a fifth aspect of the present disclosure provide a communication processing system including a terminal device configured to perform the method according to embodiments of the first aspect and a network device configured to perform the method according to embodiments of the second aspect.

Embodiments of a sixth aspect of the present disclosure provide a communication device, including: a transceiver, a memory, and a processor connected to the transceiver and the memory, configured to control wireless signal transceiving of the transceiver by executing computer-executable instructions on the memory, and cause the method according to embodiments of the first aspect or embodiments of the second aspect to be implemented.

Embodiments of a seventh aspect of the present disclosure provide a computer storage medium storing computer executable instructions that when executed by a processor, cause the method according to embodiments of the first aspect or embodiments of the second aspect to be implemented.

Embodiments of the present disclosure provide a communication processing method and apparatus, a terminal device transmits an Msg3 to a network device, the Msg3 carries first information, and the first information indicates an Msg4 HARQ-ACK repetition request or an Msg4 HARQ-ACK repetition capability, which solves the problem of how to indicate the Msg4 HARQ-ACK repetition request or the Msg4 HARQ-ACK repetition capability, enabling the network device to allocate corresponding resources in the Msg4, realizing multiple re-transmissions of the HARQ-ACK for the Msg4 by the terminal device, improving the coverage performance of the access network device in the NTN network and increasing the success rate of the terminal device accessing the NTN network.

Additional aspects and advantages of embodiments of present disclosure are given in part in the following descriptions, become apparent in part from the following descriptions, or be learned from the practice of the embodiments of the present disclosure.

### BRIEF DESCRIPTION OF THE DRAWINGS

The above and other aspects and advantages of embodiments of the present disclosure become apparent and more readily appreciated from the following descriptions made with reference to the drawings, in which:
FIG. 1 is a schematic diagram of an example of a transparent transmission mode according to an embodiment of the present disclosure.
FIG. 2 is a schematic diagram of an example of a regenerative mode according to an embodiment of the present disclosure.
FIG. 3 is a schematic diagram of an architecture of a communication processing system according to an embodiment of the present disclosure.
FIG. 4 is a sequence diagram of a communication processing method according to an embodiment of the present disclosure.
FIG. 5 is a schematic diagram of an example of an MAC CE according to an embodiment of the present disclosure.
FIG. 6 is a flow chart of a communication processing method according to an embodiment of the present disclosure.
FIG. 7 is a flow chart of a communication processing method according to an embodiment of the present disclosure.
FIG. 8 is a block diagram of a communication processing apparatus according to an embodiment of the present disclosure.
FIG. 9 is a block diagram of a communication processing apparatus according to an embodiment of the present disclosure.
FIG. 10 is a block diagram of a communication processing apparatus according to an embodiment of the present disclosure.
FIG. 11 is a block diagram of a chip according to an embodiment of the present disclosure.

### DETAILED DESCRIPTION OF THE DISCLOSURE

Embodiments of the present disclosure are described in detail and examples of the embodiments are illustrated in the drawings, where same or similar reference numerals are used to indicate same or similar members or members with same or similar functions. The embodiments described herein with reference to drawings are explanatory, illustrative, and used to generally understand the present disclosure. The embodiments shall not be construed to limit the present disclosure. It should be noted that the embodiments in the present disclosure and the features in the embodiments may be combined with each other without conflict.

Embodiments of the present disclosure provide a communication processing method. In some embodiments, terms such as the communication processing method, the information processing method, and the communication method may be interchanged with each other, terms such as the communication processing apparatus, the information processing apparatus, and the communication apparatus may be interchanged with each other, and terms such as the path loss determination system, the information processing system, and the communication system may be interchanged with each other.

The embodiments of the present disclosure are not exhaustive, but are merely illustrative of some embodiments, and are not intended to be a specific limitation on the scope of protection of the present disclosure. Unless there is no contradiction, each step in a certain embodiment may be implemented as an independent embodiment, and the steps may be arbitrarily combined, for example, a solution in which some steps are removed in a certain embodiment may also be implemented as an independent embodiment, and the order of each step in a certain embodiment may be arbitrarily exchanged, and in addition, optional implementations in a certain embodiment may be arbitrarily combined. In addition, various embodiments may be arbitrarily combined, for example, some or all steps of different embodiments may be arbitrarily combined, and one embodiment may be arbitrarily combined with alternative implementations of other embodiments.

In each embodiment of the present disclosure, if there is no special description and logical conflict, the terms and/or descriptions among the embodiments are consistent and may be referenced to each other, and technical features in different embodiments may be combined to form new embodiments according to their intrinsic logical relationships.

The terms used in embodiments of the present disclosure are only for purpose of description of particular embodiments, and are not intended to limit embodiments of the present disclosure.

In embodiments of the present disclosure, unless otherwise specified, an element represented in the singular form, such as "a", "an", "the", and the like, may represent "one and only one", or may represent "one or more", "at least one", and the like. For example, in a case where an article such as "a", "an", and "the" in English is used in translation, a noun after the article may be understood as a singular expression or a plural expression.

In embodiments of the present disclosure, the term "plurality of' refers to two or more than two.

In some embodiments, terms such as "at least one of," "one or more," "a plurality of," and "multiple" may be interchanged with each other.

In some embodiments, descriptions such as "at least one of A and B", "A and/or B", "A in one case, B in another case", "in response to one case A, in response to another case B", etc. may include the following technical solutions according to circumstances: in some embodiments, A (performing A independently of B); in some embodiments, B (performing B independently of A); in some embodiments, select from A and B for performing (A and B are selectively performed); in some embodiments, A and B (both A and B are performed). It is similar to the above when there are more branches such as A, B, C, etc.

In some embodiments, descriptions such as "A or B" may include the following technical solutions according to circumstances: in some embodiments, A (performing A independently of B); in some embodiments, B (performing B independently of A); in some embodiments, select from A and B for performing (A and B are selectively performed). It is similar to the above when there are more branches such as A, B, C, etc.

The prefix words such as "first" and "second" in embodiments of the present disclosure are only for distinguishing different description objects, and do not constitute restrictions on the position, order, priority, quantity, content, etc. of the description objects. For statements of the description objects, please refer to the description of the context in the claims or the embodiments, and should not constitute unnecessary restrictions due to the use of the prefix words. For example, if the description object is a "field", the ordinal number before the "field" in the "first field" and the "second field" does not limit the position or order between the "fields", and "first" and "second" do not limit whether the "fields" modified by them are in the same message, nor do they limit the order of the "first field" and the "second field". For another example, if the description object is "rank", the ordinal number before "rank" in "first rank" and "second rank" does not limit the priority between "ranks". For another example, the number of description objects is not limited by ordinal numbers, and may be one or more. Taking "first device" as an example, the number of "devices" may be one or more. In addition, objects modified by different prefixes may be the same or different, for example, if the description object is "device", the "first device" and the "second device" may be the same device or different devices, and the types may be the same or different. For another example, when the description object is "information", the "first information" and the "second information" may be the same information or different information, and the contents may be the same or different.

In some embodiments, terms such as "in response to," "in response to determining," "in the event of," "in a case where," "when," "if," "in a case of," and the like may be interchanged with each other.

In some embodiments, terms such as "greater than", "greater than or equal to", "not smaller than", "more than", "more than or equal to", "not less than", "higher than", "higher than or equal to", "not lower than", "above" and the like may be interchanged with each other, and terms such as "smaller than", "smaller than or equal to", "not greater than", "less than", "less than or equal to", "not more than", "lower than", "lower than or equal to", "not higher than", "below" and the like may be interchanged with each other.

In some embodiments, a device or the like may be interpreted as either physical or virtual, and the name thereof is not limited to the name described in the embodiments, and terms such as "apparatus", "equipment", "device", "circuit", "network element", "node", "function", "unit", "section", "system", "network", "chip", "chip system", "entity", and "body" may be interchanged with each other.

In some embodiments, Terms such as "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", "bandwidth part (BWP)" and the like may be interchanged with each other.

In some embodiments, terms such as "terminal", "terminal device", "user equipment (UE)", "user terminal", "mobile station (MS)", "mobile terminal (MT)", subscriber station, mobile unit, subscriber unit, wireless unit, remote unit, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, client, etc. may be interchangeable with each other.

In some embodiments, "acquiring", "obtaining", "getting", "receiving", "transmitting", "bidirectional transmission", "transmitting and/or receiving" may be interchanged with each other, and may be interpreted as receiving from other subjects, obtaining from a protocol, obtaining by itself, autonomously implementing, and the like.

In some embodiments, terms such as "sending", "emitting", "reporting", "issuing", "transmitting", "bi-directional transmission", "transmitting and/or receiving" may be interchanged with each other.

In some embodiments, "predetermined" and "preset" may be interpreted as being specified in advance in a protocol or the like, or may be interpreted as performing a preset operation by a device or the like.

In some embodiments, determining may be interpreted as evaluating, deciding, judging, calculating, computing, processing, deriving, investigating, searching, looking up, search, inquiry, ascertaining, receiving, transmitting, inputting, outputting, accessing, resolving, selecting, choosing, establishing, comparing, assuming, expecting, considering, broadcasting, notifying, communicating, forwarding, configuring, reconfiguring, allocating, mapping, assigning, etc., but it is not limited to this.

In some embodiments, the evaluating or judging may be made by a value (0 or 1) represented by 1 bit, a true or false value (Boolean value) represented by true or false, or a numerical comparison (for example, a comparison with a predetermined value), but it is not limited to this.

In some embodiments, a "network" may be interpreted as an apparatus (e.g., an access network device, a core network device, etc.) included in the network.

In some embodiments, "not expecting to receive" may be interpreted as not receiving on time domain resources and/or frequency domain resources, or may be interpreted as not performing subsequent processing on data or the like after receiving the data or the like; "not expecting to transmit" may be interpreted as not transmitting, or may be interpreted as transmitting but not expecting the receiver to respond to the transmitted content.

In some embodiments, the acquisition of data, information, etc. may comply with laws and regulations of the country where it is located.

In some embodiments, data, information, etc. may be obtained after obtaining the user's consent.

In addition, each element, each row, or each column in the table of embodiments of the present disclosure may be implemented as an independent embodiment, and any combination of any element, any row, or any column may also be implemented as an independent embodiment.

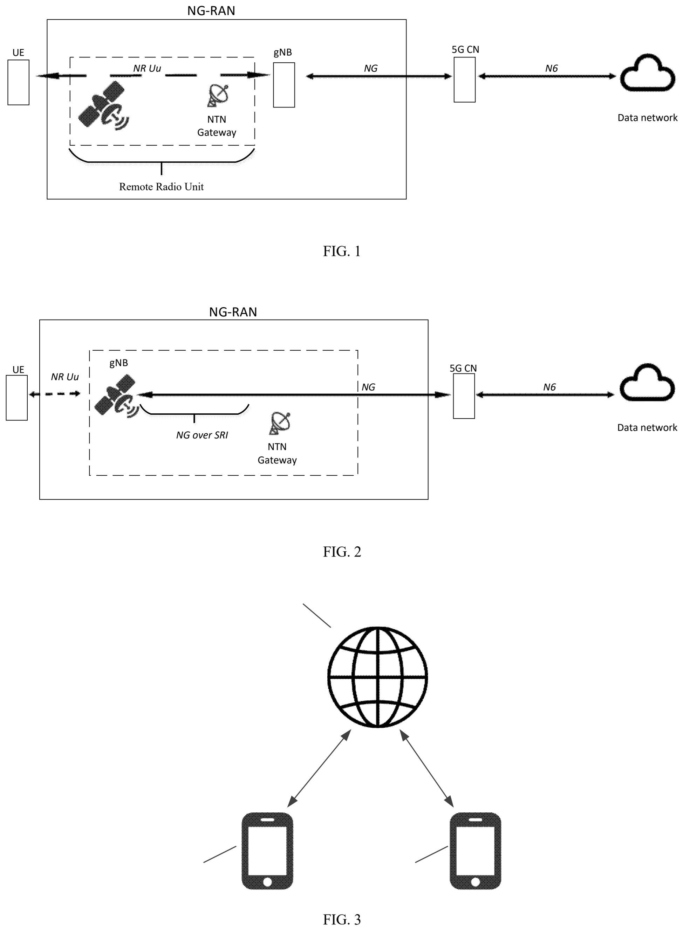

NTN communication is an important technology introduced by the 5G, which provides radio resources via network device such as satellites or drones rather than terrestrial base stations. According to the different ways in which satellites process signals, they may be divided into a transparent transmission mode and a regenerative mode. The transparent transmission mode is shown in FIG. 1, the NTN ground station sends the signal of the network device (gNB) to the satellite. The satellite converts the signal to the satellite frequency band and then sends it to the terminal device (UE) through the satellite frequency band. Except for frequency conversion and signal amplification, the satellite does not demodulate the gNB signal, similar to a repeater. The regenerative mode is shown in FIG. 2, the NTN ground station sends the signal of gNB to the satellite. The satellite demodulates and decodes the signal, recodes and modulates it (this process is regeneration), and sends the regenerated signal through the satellite frequency band.

The satellite altitude, orbit, and satellite coverage of a typical NTN network are given in Table 1:

**Table 1**

| Platforms | Altitude range | Orbit | Satellite coverage (Typical beam footprint size) |
|---|---|---|---|
| Low-Earth Orbit (LEO) satellite | 300 - 1500 km | Circular around the earth | 100 - 1000 km |
| Medium-Earth Orbit (MEO) satellite | 7000 - 25000 km | | 100 - 1000 km |
| Geostationary Earth Orbit (GEO) satellite | 35 786 km | Notional station keeping position fixed in terms of elevation/azimuth with respect to a given earth point | 200 - 3500 km |
| Unmanned aerial system satellite (UAS platform (including HAPS)) | 8-50 km (20 km for HAPS) | | 5 - 200 km |
| High elliptical orbit (HEO) satellite | 400 - 50000 km | Elliptical around the earth | 200 - 3500 km |

The NTN network is different from the TN network. Since the access network device in the NTN network is far away from the terminal device, the coverage performance of the access network device in the NTN network may be worse than that of the TN network, resulting in the terminal device being unable to access the NTN network.

To this end, the present embodiment provides a communication processing method and apparatus, for solving the above technical problems, which may realize that a terminal device indicates an Msg4 hybrid automatic repeat request-acknowledgment (HARQ-ACK) repetition request or an Msg4 HARQ-ACK repetition capability, enabling the network device to be informed that the terminal device is capable of performing the multiple re-transmissions of the HARQ-ACK for the Msg4, so that the network device may allocate corresponding resources in the Msg4 according to the actual requirements, i.e., the network device determines whether the terminal device is capable of performing multiple re-transmissions of the HARQ-ACK via the Msg4, the number of repetitions and corresponding occupied transmission resources; and the terminal device realizes multiple re-transmissions of the HARQ-ACK for the Msg4 according to the resources allocated in the Msg4 by the network device, improving the coverage performance of the access network device in the NTN network and increasing the success rate of the terminal device accessing the NTN network.

A communication processing method and apparatus provided by the present disclosure are described in detail below in conjunction with the accompanying drawings.

FIG. 3 is a block diagram of a communication processing system according to an embodiment of the present disclosure. As illustrated in FIG. 3, the system architecture may include a network device 11 and a terminal device 12.

In some examples, the network device 11 may be an entity on the network side used to transmit or receive signals. For example, the network device 11 may be a communication satellite, an evolved NodeB (eNB), a transmission reception point (TRP), a next generation NodeB (gNB) in an NR system, a base station in other future mobile communication systems, or an access node in a wireless fidelity (Wi-Fi) system, among others. The embodiments of the present disclosure do not limit the specific technology and the specific device form used for the network device 11. The network device 11 provided by embodiments of the present disclosure may be composed of a Centralized Unit (CU) and a Distributed Unit (DU), in which the CU may also be referred to as a Control Unit, and the use of the CU-DU structure may split the protocol layer of the network device, such as a base station. Some of the protocol layer functions are placed in the CU for centralized control, and some or all of the remaining protocol layer functions are distributed in the DU, which is centrally controlled by the CU.

In some examples, the terminal device 12 may also be referred to as a terminal, user equipment (UE), mobile station (MS), mobile terminal (MT) and so on. The terminal device 12 may be a vehicle with communication function, a smart vehicle, a mobile phone, a wearable device, a tablet computer (Pad), a computer with wireless transceiving function, a virtual reality terminal device, an augmented reality terminal device, a wireless terminal device for industrial control, a wireless terminal device for self-driving, a wireless terminal device for remote medical surgery, a wireless terminal device for smart grid, a wireless terminal device for transportation security, a wireless terminal device for smart city, a wireless terminal device for smart home, and so on. The embodiments of the present disclosure do not limit the specific technology and the specific device form used for the terminal device 12.

It is to be understood that the communication processing system described in embodiments of the present disclosure is intended to more clearly illustrate the technical solutions of embodiments of the present disclosure and does not constitute a limitation of the technical solutions provided by embodiments of the present disclosure, and a person of ordinary skill in the art may know that, with the evolution of the system architecture and the emergence of new business scenarios, the technical solutions provided by embodiments of the present disclosure are equally applicable to similar technical problems.

The embodiments of the present disclosure below may be applied to the communication processing system or a part of the body illustrated in FIG. 1, but it is not limited to this. Each body illustrated in FIG. 1 is an example, the communication processing system may include all or some of the bodies illustrated in FIG. 1, or other bodies other than FIG. 1, the number and form of the bodies are arbitrary, the connection relationship between the bodies is an example, the bodies may not be connected or connected, and the connection may be any form, including direct connection or indirect connection, wired connection or wireless connection.

Each embodiment of the present disclosure may be applied to satellite communication, Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 5G NR, future radio access (FRA), new-radio access technology (RAT), new radio (NR), new radio access (NX), future generation radio access (FX), global system for mobile communications (GSM (registered trademark) ), CDMA2000, ultra mobile broadband (UMB), IEEE 802.11 (Wi-Fi (registered trademark)), IEEE 802.16 (WiMAX (registered trademark)), IEEE 802.20, ultra-wideband (UWB), Bluetooth (registered trademark), public land mobile network (PLMN) network, device-to-device (D2D) system, machine to machine (M2M) system, Internet of Things (IoT) system, vehicle-to-everything (V2X) system, systems using other communication methods, next generation systems extended based on them, and the like. In addition, a plurality of systems may be applied in combination (for example, a combination of LTE or LTE-A and 5G, or the like).

In some examples, in the random access procedure, the terminal device 12 transmits an Msg3 to the network device 11, the Msg3 carries first information, the first information indicates an Msg4 HARQ-ACK repetition request or an Msg4 HARQ-ACK repetition capability. The indication information of the Msg4 HARQ-ACK repetition capability may be used for the terminal device 12 to indicate to the network device 11 its request for performing multiple re-transmissions of the HARQ-ACK for the Msg4, and the indication information of the Msg4 HARQ-ACK repetition capability may be used for the terminal device 12 to indicate to the network device 11 its capability of supporting multiple re-transmissions of the HARA-ACK for the Msg4.

The network device 11 receives the Msg3 transmitted by the terminal device 12. According to the first information carried in the Msg3, corresponding resources are allocated in the Msg4, for example, the network device 11 determines whether the terminal device may perform multiple re-transmissions of HARQ-ACK, the number of repetitions and corresponding occupied transmission resources via the Msg4. The terminal device 12 needs to feed back HARQ-ACK to the network device 11 after receiving the Msg4. During this process, the terminal device 12 may determine whether to initiate the multiple re-transmissions of HARQ-ACK according to the information indicated in the Msg4 by the network device 11 (i.e., corresponding resources allocated in the Msg4).

Embodiments of the present disclosure solve the problem of how to indicate the Msg4 HARQ-ACK repetition request or the Msg4 HARQ-ACK repetition capability, enabling the network device to allocate corresponding resources in the Msg4, realizing multiple re-transmissions of the HARQ-ACK for the Msg4 by the terminal device, improving the coverage performance of the access network device in the NTN network and increasing the success rate of the terminal device accessing the NTN network.

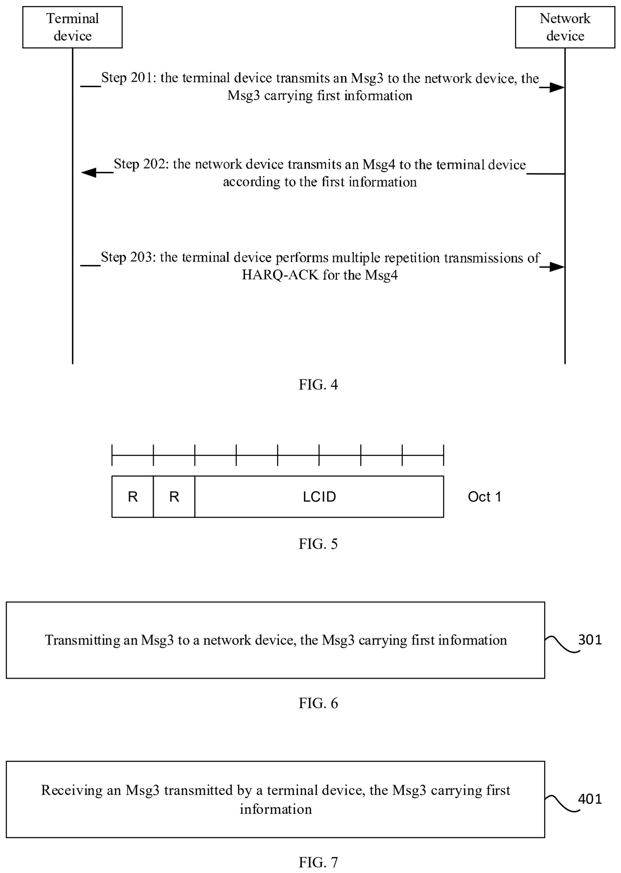

Further, in order to explain the specific execution procedure, FIG. 4 illustrates a sequence diagram of a communication processing method according to an embodiment of the present disclosure. The method is applied to the above-described communication processing system, and as illustrated in FIG. 4, the method may include following steps.

In S201, the terminal device transmits an Msg3 to the network device, and the Msg3 carries first information.

In some embodiments, the terminal device receives the first information.

In some embodiments, the first information may be information corresponding to the Msg3 in the random access procedure, and the first information may be used to indicate the Msg4 HARQ-ACK repetition request or the Msg4 HARQ-ACK repetition capability, that is, the terminal device indicates to the network device that the terminal device may perform multiple re-transmissions of HARQ-ACK for Msg4. The indication information of the Msg4 HARQ-ACK repetition request may be used for the terminal device to indicate to the network device its request for performing multiple re-transmissions of the HARQ-ACK for the Msg4, and the indication information of the Msg4 HARQ-ACK repetition capability may be used for the terminal device to indicate to the network device its capability of supporting multiple re-transmissions of the HARQ-ACK for the Msg4.

For example, the first information may be indication information, signaling, or the like for indicating the Msg4 HARQ-ACK repetition request or the Msg4 HARQ-ACK repetition capability, and the network device allocates corresponding resources in the Msg4 according to the first information, that is, the network device determines whether the terminal device may perform multiple re-transmissions of the HARQ-ACK, the number of repetitions, the corresponding occupied transmission resources, and the like via the Msg4.

In some embodiments, the first information corresponding to the Msg3 transmitted by the terminal device to the network device does not carry a common control channel (CCCH) service data unit (SDU), and the present embodiment may realize how the Msg3 indicates the Msg4 HARQ-ACK repetition request or the Msg4 HARQ-ACK repetition capability in a case where the Msg3 does not carry the CCCH SDU.

For example, in some random access scenarios, such as small data transmission (SDT) scenario in an inactive state of the terminal device and a scenario in a connected state of the terminal device, the terminal device does not carry the CCCH SDU in the transmitted Msg3. In this case, in order to solve the problem of how to indicate the Msg4 HARQ-ACK repetition request or the Msg4 HARQ-ACK repetition capability, the terminal device may carry the indication information in the first information corresponding to the Msg3, and the indication information may be used to indicate the Msg4 HARQ-ACK repetition request or the Msg4 HARQ-ACK repetition capability.

In some embodiments, the network device does not configure a physical uplink control channel (PUCCH) resource for the terminal device to transmit the HARQ-ACK. For example, the terminal device determines whether there is a dedicated PUCCH resource for transmitting the HARQ-ACK according to a configuration (such as network configuration or pre-configuration, etc.), and the terminal device may carry the first information indicating the Msg4 HARQ-ACK repetition request or the Msg4 HARQ-ACK repetition capability in the Msg3 only when it is determined that no dedicated PUCCH resource is configured for transmitting the HARQ-ACK.

In some embodiments, the terminal device may determine whether to transmit the first information indicating the Msg4 HARQ-ACK repetition request or to transmit the first information indicating the Msg4 HARQ-ACK repetition capability in a variety of ways, which are not limited herein. For example, the terminal device may determine according to whether the network device configures an RSRP threshold for the Msg4 HARQ-ACK repetition. For another example, the terminal device may determine according to an indication transmitted by the network device. For example, according to the indication transmitted by the network device, the terminal device is allowed to transmit the first information indicating the Msg4 HARQ-ACK repetition request or the terminal device is allowed to transmit the first information indicating the Msg4 HARQ-ACK repetition capability.

The following uses the case where the terminal device determine whether to transmit the first information indicating the Msg4 HARQ-ACK repetition request or to transmit the first information indicating the Msg4 HARQ-ACK repetition capability based on the RSRP threshold of the Msg4 HARQ-ACK repetition as an example to describe the method provided by embodiments of the present disclosure.

For example, if the network device configures the RSRP threshold for the Msg4 HARQ-ACK repetition, and when the downlink RSRP measured by the terminal device is lower than the configured RSRP threshold for the Msg4 HARQ-ACK repetition, the terminal device may transmit the first information indicating the Msg4 HARQ-ACK repetition request in the Msg3; and when the downlink RSRP measured by the terminal device is higher than the configured RSRP threshold for the Msg4 HARQ-ACK repetition, the terminal device does not transmit the first information indicating the Msg4 HARQ-ACK repetition request in the Msg3. If the network device does not configure the RSRP threshold for the Msg4 HARQ-ACK repetition, then the terminal device may transmit the first information indicating the Msg4 HARQ-ACK repetition capability in the Msg3.

In the present embodiment, the network device may configure the RSRP threshold for the Msg4 HARQ-ACK repetition in a variety of alternative approaches.

As an alternative approach, the RSRP threshold for the Msg4 HARQ-ACK repetition may be configured through a cell handover command, and correspondingly, the terminal device may receive the cell handover command, the cell handover command may include first configuration information, and the first configuration information indicates the RSRP threshold for the Msg4 HARQ-ACK repetition.

The cell handover command may be used to indicate the handover of a serving cell, and the corresponding network device may change or may remain unchanged during the handover of the serving cell by the terminal device. In some examples, the handover of the serving cell may be a handover from a TN network to an NTN network.

The cell handover command is transmitted to the terminal device by a target network device (the corresponding network device after handover) through a source network device (the corresponding network device before handover). For example, a network device A (the corresponding network device after the cell handover) transmits the cell handover command to the terminal device in the RRC connected state through a network device B (the corresponding network device before the cell handover), and the cell handover command may include the first configuration information for indicating the RSRP threshold for the Msg4 HARQ-ACK repetition. When the downlink RSRP measured by the terminal device is lower than the configured RSRP threshold based on the RSRP threshold for the Msg4 HARQ-ACK repetition configured in the cell handover command during the random access procedure to the network device A, the terminal device transmits the first information indicating the Msg4 HARQ-ACK repetition request in the Msg3.

As another alternative approach, the RSRP threshold for the Msg4 HARQ-ACK repetition may be configured through dedicated signaling, and correspondingly, the terminal device may receive first signaling (e.g., the dedicated signaling), the first signaling may include second configuration information, and the second configuration information indicates the RSRP threshold for the Msg4 HARQ-ACK repetition. For example, the terminal device in the RRC connected state may receive configuration information transmitted by the network device through the dedicated signaling, and the configuration information may indicate the RSRP threshold for the Msg4 HARQ-ACK repetition. When the downlink RSRP measured by the terminal device is lower than the configured RSRP threshold based on the RSRP threshold for the Msg4 HARQ-ACK repetition configured in the first signaling during the random access procedure to the network device, the terminal device transmits the first information indicating the Msg4 HARQ-ACK repetition request in the Msg3.

As still another alternative approach, the RSRP threshold for the Msg4 HARQ-ACK repetition may be configured through a system message such as the SIB, and correspondingly, the terminal device may receive the system message, the system message may include third configuration information, and the third configuration information indicates the RSRP threshold for the Msg4 HARQ-ACK repetition. For example, the terminal device receives a system message transmitted by the network device before or after determining the network device to be accessed, and then determines the RSRP threshold for the Msg4 HARQ-ACK repetition based on the system message.

For example, when the downlink RSRP measured by the terminal device is lower than the configured RSRP threshold based on the RSRP threshold for the Msg4 HARQ-ACK repetition configured in the system message during the random access procedure to the network device, the terminal device transmits the first information indicating the Msg4 HARQ-ACK repetition request in the Msg3.

In some examples, if the RSRP threshold for the Msg4 HARQ-ACK repetition is configured through the dedicated signaling, the RSRP threshold configured through the dedicated signaling is used, and if the network device does not configure the RSRP threshold through the dedicated signaling, the terminal device in the RRC connected state may not indicate the Msg4 HARQ-ACK repetition request via the Msg3. Alternatively, if the network device does not configure the RSRP threshold through the dedicated signaling, but the RSRP threshold is configured in the system message, the terminal device may use the RSRP threshold for the Msg4 HARQ-ACK repetition configured in the system message. Alternatively, if the network device does not configure the RSRP threshold through the dedicated signaling or does not configure the RSRP threshold through the system message, the terminal device in the RRC connected state may not indicate the Msg4 HARQ-ACK repetition request via the Msg3.

In some embodiments, the RSRP threshold for the Msg4 HARQ-ACK repetition configured by the network device may be configured after determining the capability information of the terminal device. For example, the RSRP threshold value for the Msg4 HARQ-ACK repetition may be configured by issuing a cell handover command, first signaling, or a system message. The capability information may include a capability of supporting the multiple re-transmissions of the HARQ-ACK for the Msg4 indicated by the terminal device to the network device.

In some embodiments, if the terminal device is not configured with the RSRP threshold for the Msg4 HARQ-ACK repetition, then the terminal device may transmit the first information indicating the Msg4 HARQ-ACK repetition capability in the Msg3. Of course, in order to meet different requirements, if the RSRP threshold for the Msg4 HARQ-ACK repetition is not configured, the terminal device may not transmit the first information indicating the Msg4 HARQ-ACK repetition capability in the Msg3, and the details may be determined according to the actual situation, which is not limited by the present embodiment.

As described above, it is possible to determine whether to transmit the first information indicating the Msg4 HARQ-ACK repetition request or to transmit the first information indicating the Msg4 HARQ-ACK repetition capability according to whether the network device configures the RSRP threshold for the Msg4 HARQ-ACK repetition. In addition, in some embodiments, the terminal device may determine whether to transmit the first information indicating the Msg4 HARQ-ACK repetition request according to an indication of the network device. Accordingly, the method of the present embodiment may include receiving second signaling (such as dedicated signaling), the second signaling may include second information, specifically indication information or the like, and the second information may be used to determine whether the terminal device in the RRC connected state is allowed to indicate the Msg4 HARQ-ACK repetition request.

For example, the terminal device in the RRC connected state may determine that it is allowed by the network device to indicate the Msg4 HARQ-ACK repetition request according to the indication information transmitted by the network device via the dedicated signaling, so that when the downlink RSRP measured by the terminal device is lower than the configured RSRP threshold for the Msg4 HARQ-ACK repetition, the terminal device transmits the first information indicating the Msg4 HARQ-ACK repetition request in the Msg3. However, if the terminal device in the RRC connected state determines that it is not allowed by the network device to indicate the Msg4 HARQ-ACK repetition request according to the indication information transmitted by the network device via the dedicated signaling, the terminal device cannot transmit the first information indicating the Msg4 HARQ-ACK repetition request even if the downlink RSRP measured by the terminal device is lower than the configured RSRP threshold for the Msg4 HARQ-ACK repetition.

In some embodiments, the method of the present embodiment may include the terminal device transmitting capability indication information to the network device, in which the capability indication information may include whether the terminal device supports Msg4 HARQ-ACK repetition. For example, the terminal device in the RRC connected state transmits the capability indication information to the network device via an RRC message (such as UECapabilityInformation), and the information may include whether the terminal device in the RRC connected state supports HARQ-ACK repetition for Msg4. If the terminal device supports the capability, the network device allocates corresponding resources in the Msg4 according to its capability. For example the network device determines that the terminal device may perform the multiple re-transmissions of HARQ-ACK, the number of repetitions and corresponding occupied transmission resources via the Msg4.

In some embodiments, in order to meet more actual requirements, the terminal device in the RRC connected state may not use the Msg3 to indicate the capability information of whether supporting the Msg4 HARQ-ACK repetition, and the details may be determined according to the actual requirements, which is not limited by the present embodiment.

In the present embodiment, in order to explain the specific form of the first information transmitted by the terminal device in the Msg3, in some embodiments, the first information may be carried in the C-RNTI MAC CE in the Msg3. The terminal device may indicate the Msg4 HARQ-ACK repetition request or the Msg4 HARQ-ACK repetition capability through the first information carried in the C-RNTI MAC CE in the Msg3.

In some examples, the first information may be carried in an MAC sub-header of the C-RNTI MAC CE, specifically in a variety of alternative approaches.

As an alternative approach, a reserved bit in the MAC sub-header of the C-RNTI MAC CE may be used to carry the first information. For example, as illustrated in FIG. 5, it is a schematic diagram of a MAC sub-header of a C-RNTI MAC CE, where R represents a reserved bit and LCID represents a logical channel identifier. In the present embodiment, one of the R bits may be used to carry the first information, such as 1 indicates the Msg4 HARQ-ACK repetition request, 0 indicates the Msg4 HARQ-ACK repetition capability; alternatively, 1 indicates the Msg4 HARQ-ACK repetition capability and 0 indicates the Msg4 HARQ-ACK repetition request.

In addition, as another alternative approach, the terminal device may use the LCID in the MAC sub-header of the C-RNTI MAC CE to carry the first information.

For example, the terminal device uses a new LCID to identify the C-RNTI MAC CE. Existing protocols identify that the C-RNTI MAC CE is carried in the MAC sub-PDU by indicating LCID = 58 in the MAC sub-header. The C-RNTI MAC CE may be indicated by selecting one of the currently reserved LCIDs (37-42). When the selected LCID is used to identify the C-RNTI MAC CE, it indicates that the terminal device indicates the Msg4 HARQ-ACK repetition request or the Msg4 HARQ-ACK repetition capability. If the previous LCID = 58 is used to indicate the C-RNTI MAC CE, it means that the Msg4 HARQ-ACK repetition request or the Msg4 HARQ-ACK repetition capability is not indicated.

It should be noted that the method of the present embodiment may be applied to random access triggered by beam failure recovery (BFR), random access triggered by a scheduling request (SR), random access triggered by small data transmission (SDT) in an inactive state, random access during cell handover, or random access during a secondary cell group (SCG) addition or change process, which is not limited by the present embodiment.

In step 202: the network device transmits an Msg4 to the terminal device according to the first information.

The network device schedules a corresponding resource according to the first information carried in the Msg3, and transmits the Msg4 to the terminal device. The Msg4 may carry information such as determining whether the terminal device may perform multiple re-transmissions of the HARQ-ACK, the number of repetitions, and the corresponding occupied transmission resources (time-frequency domain resources), and the occupied transmission resources may be reserved resources for uploading the HARQ-ACK.

In step 203: the terminal device performs multiple re-transmissions of the HARQ-ACK for the Msg4.

When the terminal device receives the Msg4 transmitted by the network device, the terminal device transmits the HARQ-ACK for the Msg4 to the network device, and performs multiple re-transmissions of the HARQ-ACK using corresponding time-frequency domain resources based on the number of repetitions indicated by the network device according to the information carried in the Msg4.

In some embodiments, if the terminal device successfully receives the Msg4, the terminal device transmits the HARQ-ACK for the Msg4 to the network device, and may perform multiple re-transmissions of the HARQ-ACK using corresponding time-frequency domain resources based on the number of repetitions indicated by the network device according to the information carried in the Msg4. The Msg4 may include a first portion and a second portion, the first portion may represent the Msg4 message itself, the second portion may be scheduling information of the Msg4, and the scheduling information may include a transmission resource location of the Msg4 message. The information indicated by the network device, such as determining whether the terminal device may perform multiple re-transmissions of HARQ-ACK, and the number of repetitions and corresponding occupied transmission resources (time-frequency domain resources), may be stored in the second portion of the Msg4. If a decoding error occurs in the first portion of the Msg4, the multiple re-transmissions of the HARQ-NACK may performed using the corresponding time-frequency domain resources based on the number of repetitions indicated by the network device according to the information carried in the second portion of the Msg4. If the terminal device does not receive the Msg4, the terminal device may not transmit the HARQ-ACK for the Msg4 to the network device.

Embodiments of the present disclosure solve the problem of how to indicate the Msg4 HARQ-ACK repetition request or the Msg4 HARQ-ACK repetition capability, enabling the network device to allocate corresponding resources in the Msg4, realizing multiple re-transmissions of the HARQ-ACK for the Msg4 by the terminal device, improving the coverage performance of the access network device in the NTN network and increasing the success rate of the terminal device accessing the NTN network.

To illustrate the specific execution process of the network device, FIG. 6 shows a flow chart of a communication processing method according to an embodiment of the present disclosure. The method is performed on the terminal device side and may include the following step.

In step 301: transmitting an Msg3 to a network device, the Msg3 carrying first information.

The first information may indicate an Msg4 HARQ-ACK repetition request or an Msg4 HARQ-ACK repetition capability. That is, the terminal device indicates to the network device that the terminal device may perform multiple re-transmission of HARQ-ACK for the Msg4. The indication information of the Msg4 HARQ-ACK repetition request may be used for the terminal device to indicate to the network device its request for performing multiple re-transmissions of the HARQ-ACK for the Msg4, and the indication information of the Msg4 HARQ-ACK repetition capability may be used for the terminal device to indicate to the network device its capability of supporting multiple re-transmissions of the HARQ-ACK for the Msg4.

The first information may be indication information, signaling, or the like. In some embodiments, the Msg3 does not carry the CCCH SDU. For example, the CCCH SDU is not carried in the Msg3 transmitted in some scenarios such as the terminal device is in the RRC inactive state or the RRC connected state. When the Msg3 does not carry the CCCH SDU, the Msg3 carries the indication information for indicating the Msg4 HARQ-ACK repetition request or the Msg4 HARQ-ACK repetition capability, and the present embodiment may enable the indication of the Msg4 HARQ-ACK repetition request or the Msg4 HARQ-ACK repetition capability when the Msg3 does not carry the CCCH SDU.

In some embodiments, the network device does not configure the PUCCH resource for transmitting the HARQ-ACK. For example, the terminal device may carry the indication information for indicating the Msg4 HARQ-ACK repetition request or the Msg4 HARQ-ACK repetition capability in the Msg3 only when no dedicated PUCCH resource is configured for transmitting the HARQ-ACK.

Further, in order to clarify whether to transmit the first information indicating the Msg4 HARQ-ACK repetition request or to transmit the first information indicating the Msg4 HARQ-ACK repetition capability, it is may be determined according to whether the network device configures the RSRP threshold for the Msg4 HARQ-ACK repetition. For example, when a downlink RSRP measured by the terminal device is lower than the configured RSRP threshold for the Msg4 HARQ-ACK repetition, and the terminal carries the indication information for indicating the Msg4 HARQ-ACK repetition request in the Msg3.

In the present embodiment, the network device may configure the RSRP threshold for the Msg4 HARQ-ACK repetition in a variety of alternative approaches.

As an alternative approach, the RSRP threshold for the Msg4 HARQ-ACK repetition may be configured through a cell handover command, and correspondingly, the terminal device may receive the cell handover command, the cell handover command may include first configuration information, and the first configuration information indicates the RSRP threshold for the Msg4 HARQ-ACK repetition.

As another alternative approach, the RSRP threshold for the Msg4 HARQ-ACK repetition may be configured through dedicated signaling, and correspondingly, the terminal device may receive first signaling (e.g., the dedicated signaling), the first signaling may include second configuration information, and the second configuration information indicates the RSRP threshold for the Msg4 HARQ-ACK repetition.

As still another alternative approach, the RSRP threshold for the Msg4 HARQ-ACK repetition may be configured through a system message, and correspondingly, the terminal device may receive the system message, the system message may include third configuration information, and the third configuration information indicates the RSRP threshold for the Msg4 HARQ-ACK repetition.

In some embodiments, if the terminal device is not configured with the RSRP threshold for the Msg4 HARQ-ACK repetition, then the terminal device may transmit the first information indicating the Msg4 HARQ-ACK repetition capability in the Msg3. Of course, in order to meet different actual requirements, if the RSRP threshold for the Msg4 HARQ-ACK repetition is not configured, the terminal device may not transmit the first information indicating the Msg4 HARQ-ACK repetition capability in the Msg3, and the details may be determined according to the actual situation, which is not limited by the present embodiment.

As described above, it is possible to determine whether to transmit the first information indicating the Msg4 HARQ-ACK repetition request or to transmit the first information indicating the Msg4 HARQ-ACK repetition capability according to whether the network device configures the RSRP threshold for the Msg4 HARQ-ACK repetition. In addition, in some embodiments, the terminal device may determine whether to transmit the first information indicating the Msg4 HARQ-ACK repetition request according to an indication of the network device. Accordingly, the method of the present embodiment may further include the terminal device receiving second signaling (such as dedicated signaling), in which the second signaling may include second information, and the second information is used to determine whether the terminal device in the RRC connected state is allowed to indicate the Msg4 HARQ-ACK repetition request.

In some embodiments, the method of the present embodiment may include the terminal device in the RRC connected state transmitting capability indication information to the network device, in which the capability indication information includes whether the terminal device supports Msg4 HARQ-ACK repetition.

In some embodiments, the terminal device may not use the Msg3 to indicate capability information of whether supporting Msg4 HARQ-ACK repetition, and details may be determined according to the actual requirement, which is not limited by the present embodiment.

In the present embodiment, in order to explain the specific form of the first information transmitted by the terminal device in the Msg3, in some embodiments, the first information may be carried in the C-RNTI MAC CE in the Msg3.

In some examples, the first information may be carried in an MAC sub-header of the C-RNTI MAC CE, specifically in a variety of alternative approaches.

As an alternative approach, a reserved bit in the MAC sub-header of the C-RNTI MAC CE may be used to carry the first information.

In addition, as another alternative approach, the terminal device may use the LCID in the MAC sub-header of the C-RNTI MAC CE to carry the first information.

It should be noted that the method of the present embodiment may be applied to random access triggered by beam failure recovery (BFR), random access triggered by a scheduling request (SR), random access triggered by small data transmission (SDT) in an inactive state, random access during cell handover, or random access during a secondary cell group (SCG) addition or change procedure, which is not limited by the present embodiment.

The description of specific examples in the present embodiment may be seen in the corresponding description of the embodiments in FIGS. 1 to 5, and is not repeated here.

Embodiments of the present disclosure solve the problem of how to indicate the Msg4 HARQ-ACK repetition request or the Msg4 HARQ-ACK repetition capability, enabling the network device to allocate corresponding resources in the Msg4, realizing multiple re-transmissions of the HARQ-ACK for the Msg4 by the terminal device, improving the coverage performance of the access network device in the NTN network and increasing the success rate of the terminal device accessing the NTN network.

FIG. 7 is a flow chart of a communication processing method according to an embodiment of the present disclosure. As illustrated in FIG. 7, the method is performed on the network device side, and may include the following step.

In step 401: an Msg3 transmitted by a terminal device is received, the Msg3 carrying the first information.

The first information indicates an Msg4 HARQ-ACK repetition request or an Msg4 HARQ-ACK repetition capability.

In some embodiments, the Msg3 does not carry a CCCH SDU.

In some embodiments, the network device does not configure a PUCCH resource for the terminal device to transmit the HARQ-ACK, such as a dedicated PUCCH resource.

In some embodiments, when a downlink RSRP measured by the terminal device is lower than a configured RSRP threshold for the Msg4 HARQ-ACK repetition, and the first information carried in Msg3 indicates the Msg4 HARQ-ACK repetition request.

In some embodiments, first configuration information is carried in a cell handover command of the terminal device, and the first configuration information indicates an RSRP threshold for the Msg4 HARQ-ACK repetition.

In some embodiments, the method of the present embodiment may include transmitting first signaling to the terminal device, in which the first signaling may include second configuration information, and the second configuration information indicates an RSRP threshold for the Msg4 HARQ-ACK repetition.

In some embodiments, the method of the present embodiment may include transmitting a system message to the terminal device, in which the system message may include third configuration information, and the third configuration information indicates an RSRP threshold for the Msg4 HARQ-ACK repetition.

In some embodiments, the terminal device is not configured with an RSRP threshold for Msg4 HARQ-ACK repetition, and the Msg3 carries first information indicating the Msg4 HARQ-ACK repetition capability.

In some embodiments, the terminal device is in an RRC inactive state or an RRC connected state.

In some embodiments, the method of the present embodiment may include transmitting second signaling to the terminal device in the RRC connected state, in which the second signaling may include second information, and the second information is used to determine whether the terminal device is allowed to indicate the Msg4 HARQ-ACK repetition request.

In some embodiments, the method of the present embodiment may further include receiving capability indication information transmitted by the terminal device in the RRC connected state, in which the capability indication information may include whether the terminal device supports Msg4 HARQ-ACK repetition.

In some embodiments, the terminal device in the RRC connected state may not use the Msg3 to indicate capability information of whether supporting Msg4 HARQ-ACK repetition.

In some embodiments, the terminal device may carry the first information in the C-RNTI MAC CE in the Msg3.

In some embodiments, the terminal device may carry the first information in an MAC sub-header of the C-RNTI MAC CE.

In some embodiments, the terminal device may use a reserved bit in the MAC sub-header of the C-RNTI MAC CE to carry the first information.

In some embodiments, the terminal device may use an LCID in the MAC sub-header of the C-RNTI MAC CE to carry the first information.

It should be noted that the method of the present embodiment may be applied to random access triggered by beam failure recovery (BFR), random access triggered by a scheduling request (SR), random access triggered by small data transmission (SDT) in an inactive state, random access during cell handover, or random access during a secondary cell group (SCG) addition or change procedure, which is not limited by the present embodiment.

The description of specific examples in the present embodiment may be seen in the corresponding description of the embodiments in FIGS. 1 to 6, and is not repeated here.

Embodiments of the present disclosure solve the problem of how to indicate the Msg4 HARQ-ACK repetition request or the Msg4 HARQ-ACK repetition capability, enabling the network device to allocate corresponding resources in the Msg4, realizing multiple re-transmissions of the HARQ-ACK for the Msg4 by the terminal device, improving the coverage performance of the access network device in the NTN network and increasing the success rate of the terminal device accessing the NTN network.

In embodiments provided in the present disclosure described above, the methods provided in embodiments of the present disclosure are described from the perspective of the terminal device and the network device, respectively. In order to realize each of the functions in the method provided in embodiments of the present disclosure described above, the terminal device and the network device may include a hardware structure, a software module, in the form of a hardware structure, a software module, or a hardware structure plus a software module to realize each of the functions described above. One of the above functions may be performed as a hardware structure, a software module, or a hardware structure plus a software module.

Corresponding to the communication processing method provided by the several embodiments, the present disclosure also provides a communication processing apparatus. Since the communication processing apparatus provided by the embodiments of the present disclosure corresponds to the communication processing method provided by the several embodiments described above, the implementation of the communication processing method is also applicable to the communication processing apparatus provided by the present embodiment, which is not described in detail in the present embodiment.

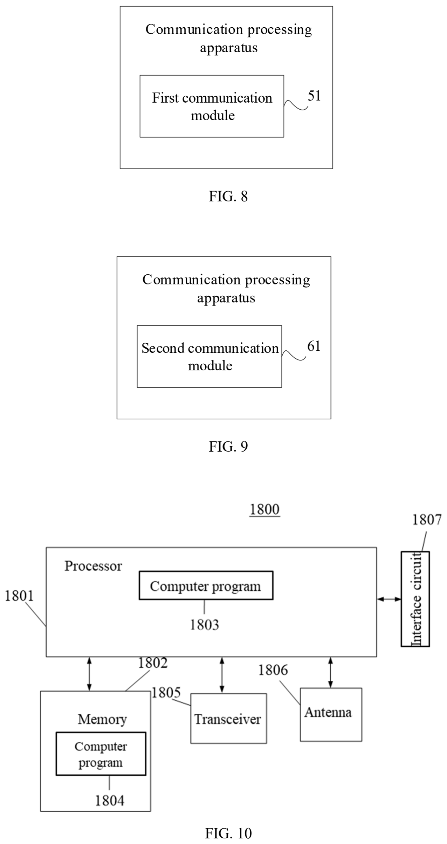

FIG. 8 is a block diagram of a communication processing apparatus provided by an embodiment of the present disclosure; and the communication processing apparatus may be applied to the terminal device.

As illustrated in FIG. 8, the apparatus may include a first communication module 51 configured to transmit an Msg3 carrying first information, in which the first information indicates an Msg4 HARQ-ACK repetition request or an Msg4 HARQ-ACK repetition capability.

In some embodiments, the Msg3 does not carry a CCCH SDU.

In some embodiments, the network device does not configure a PUCCH resource for the terminal device to transmit the HARQ-ACK.

In some embodiments, a downlink RSRP measured by the terminal device is lower than a configured RSRP threshold for Msg4 HARQ-ACK repetition, and the first information carried in the Msg3 indicates the Msg4 HARQ-ACK repetition request.

In some embodiments, the first communication module 51 is further configured to receive a cell handover command, the cell handover command includes first configuration information, and the first configuration information indicates an RSRP threshold for the Msg4 HARQ-ACK repetition.

In some embodiments, the first communication module 51 is further configured to receive first signaling, the first signaling includes second configuration information, and the second configuration information indicates an RSRP threshold for the Msg4 HARQ-ACK repetition.

In some embodiments, the first communication module 51 is further configured to receive a system message, the system message includes third configuration information, and the third configuration information indicates an RSRP threshold for the Msg4 HARQ-ACK repetition.

In some embodiments, the terminal device is not configured with an RSRP threshold for Msg4 HARQ-ACK repetition, and the Msg3 carries first information indicating the Msg4 HARQ-ACK repetition capability.

In some embodiments, the terminal device is in an RRC inactive state or an RRC connected state.

In some embodiments, the first communication module 51 is further configured to receive second signaling, in which the second signaling includes second information, and the second information is used to determine whether the terminal device is allowed to indicate the Msg4 HARQ-ACK repetition request.

In some embodiments, the first communication module 51 is further configured to transmit capability indication information to the network device, in which the capability indication information includes whether the terminal device supports Msg4 HARQ-ACK repetition.

In some embodiments, the terminal device does not use the Msg3 to indicate capability information of whether supporting Msg4 HARQ-ACK repetition.

In some embodiments, the first information is carried in the C-RNTI MAC CE in the Msg3.

In some embodiments, the first information is carried in an MAC sub-header of the C-RNTI MAC CE.

In some embodiments, a reserved bit in the MAC sub-header of the C-RNTI MAC CE is used to carry the first information.

In some embodiments, a logical channel identifier (LCID) in the MAC sub-header of the C-RNTI MAC CE is used to carry the first information.

In some embodiments, the method of embodiments of the second aspect is applied to random access triggered by beam failure recovery (BFR), random access triggered by a scheduling request (SR), random access triggered by small data transmission (SDT) in an inactive state, random access during cell handover, or random access during a secondary cell group (SCG) addition or change procedure.

Embodiments of the present disclosure solve the problem of how to indicate the Msg4 HARQ-ACK repetition request or the Msg4 HARQ-ACK repetition capability, enabling the network device to allocate corresponding resources in the Msg4, realizing multiple re-transmissions of the HARQ-ACK for the Msg4 by the terminal device, improving the coverage performance of the access network device in the NTN network and increasing the success rate of the terminal device accessing the NTN network.

FIG. 9 is a block diagram of a communication processing apparatus provided by an embodiment of the present disclosure; and the communication processing apparatus may be applied to a terminal device side.

As illustrated in FIG. 9, the apparatus may include: a second communication module 61 configured to receive an Msg3 transmitted by a terminal device, the Msg3 carrying first information, in which the first information indicates an Msg4 HARQ-ACK repetition request or an Msg4 HARQ-ACK repetition capability.

In some embodiments, the Msg3 does not carry a CCCH SDU.

In some embodiments, the network device does not configure a PUCCH resource for the terminal device to transmit the HARQ-ACK.

In some embodiments, a downlink RSRP measured by the terminal device is lower than a configured RSRP threshold for Msg4 HARQ-ACK repetition, and the first information carried in Msg3 indicates the Msg4 HARQ-ACK repetition request.

In some embodiments, first configuration information is carried in a cell handover command of the terminal device, and the first configuration information indicates an RSRP threshold for the Msg4 HARQ-ACK repetition.

In some embodiments, the second communication module 61 is further configured to transmit first signaling to the terminal device, in which the first signaling includes second configuration information, and the second configuration information indicates an RSRP threshold for the Msg4 HARQ-ACK repetition.

In some embodiments, the second communication module 61 is further configured to transmit a system message to the terminal device, in which the system message includes third configuration information, and the third configuration information indicates an RSRP threshold for the Msg4 HARQ-ACK repetition.

In some embodiments, the terminal device is not configured with an RSRP threshold for Msg4 HARQ-ACK repetition, and the Msg3 carries first information indicating the Msg4 HARQ-ACK repetition capability.

In some embodiments, the terminal device is in an RRC inactive state or an RRC connected state.

In some embodiments, the second communication module 61 is further configured to transmit second signaling to the terminal device, in which the second signaling includes second information, and the second information is used to determine whether the terminal device is allowed to indicate the Msg4 HARQ-ACK repetition request.

In some embodiments, the second communication module 61 is further configured to receive capability indication information transmitted by the terminal device, in which the capability indication information includes whether the terminal device supports Msg4 HARQ-ACK repetition.

In some embodiments, the terminal device does not use the Msg3 to indicate capability information of whether supporting Msg4 HARQ-ACK repetition.

In some embodiments, the first information is carried in the C-RNTI MAC CE in the Msg3.

In some embodiments, the first information is carried in an MAC sub-header of the C-RNTI MAC CE.

In some embodiments, a reserved bit in the MAC sub-header of the C-RNTI MAC CE is used to carry the first information.

In some embodiments, a logical channel identifier (LCID) in the MAC sub-header of the C-RNTI MAC CE is used to carry the first information.

In some embodiments, the method of embodiments of the second aspect is applied to random access triggered by beam failure recovery (BFR), random access triggered by a scheduling request (SR), random access triggered by small data transmission (SDT) in an inactive state, random access during cell handover, or random access during a secondary cell group (SCG) addition or change procedure.

Embodiments of the present disclosure solve the problem of how to indicate the Msg4 HARQ-ACK repetition request or the Msg4 HARQ-ACK repetition capability, enabling the network device to allocate corresponding resources in the Msg4, realizing multiple re-transmissions of the HARQ-ACK for the Msg4 by the terminal device, improving the coverage performance of the access network device in the NTN network and increasing the success rate of the terminal device accessing the NTN network.

Referring to FIG. 10, FIG. 10 is a block diagram of a communication device 1800 provided by the present embodiment. The communication device 1800 may be a network device, a user equipment, a chip, a chip system, or a processor, etc. that supports the network device to realize the above-described method, or a chip, a chip system, or a processor, etc. that supports the user equipment to realize the above-described method. The device may be configured to realize the methods described in the above method embodiments, and the details may be found in the description of the above method embodiments.

The communication device 1800 may include one or more processors 1801. The processor 1801 may be a general purpose processor or a specialized processor, etc. This may be, for example, a baseband processor or a central processor. The baseband processor may be used to process the communication protocol as well as the communication data, and the central processor may be used to control the communication device (e.g., the base station, the baseband chip, the terminal device, the terminal device chip, the DU or the CU, etc.), execute the computer program, and process the data of the computer program.

Optionally, the communication device 1800 may also include one or more memories 1802, on which a computer program 1804 may be stored, and the processor 1801 executes the computer program 1804 to cause the communication device 1800 to perform the method described in the method embodiment described above. Optionally, data may also be stored in the memory 1802. The communication device 1800 and the memory 1802 may be provided separately or may be integrated together.

Optionally, the communication device 1800 may also include a transceiver 1805, and an antenna 1806. The transceiver 1805 may be referred to as a transceiver unit, a transceiver machine, or a transceiver circuit, etc., and is used to implement the transmitting and receiving functions. The transceiver 1805 may include a receiver and a transmitter, the receiver may be referred to as a receiving machine or a receiving circuit, etc., for implementing the receiving function, and the transmitter may be referred to as a transmitting machine or a transmitting circuit, etc., for implementing the transmitting function.

Optionally, the communication device 1800 may also include one or more interface circuits 1807. The interface circuit 1807 is used to receive code instructions and transmit them to the processor 1801. The processor 1801 runs said code instructions to cause the communication device 1800 to perform the method described in the method embodiment above.

In an implementation, the processor 1801 may include a transceiver for implementing receiving and transmitting functions. The transceiver may, for example, be a transceiver circuit, or an interface, or an interface circuit. The transceiver circuit, interface or interface circuit used to implement the receiving and transmitting functions may be separate or integrated. The above transceiver circuit, interface or interface circuit may be used for code/data reading and writing, or, the above transceiver circuit, interface or interface circuit may be used for signal transmission or delivery.

In one implementation, the processor 1801 may store a computer program 1803, and the computer program 1803 running on the processor 1801 may cause the communication device 1800 to perform the method described in the method embodiment above. The computer program 1803 may be solidified in the processor 1801, and in this case, the processor 1801 may be implemented by hardware.

In one implementation, the communication device 1800 may include a circuit, and the circuit may realize the function of sending or receiving or communicating in the method embodiment above. The processor and transceiver described in the present disclosure may be implemented on integrated circuit (IC), analog IC, radio frequency integrated circuit (RFIC), mixed signal IC, application specific integrated circuit (ASIC), printed circuit board (PCB), electronic device, and the like. The processor and transceiver may also be fabricated using various IC process technologies such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The communication device in the above description of embodiments may be a network device or a user equipment, but the scope of the communication device described in the present disclosure is not limited thereto, and the structure of the communication device may not be limited by FIG. 10. The communication device may be a stand-alone device or may be part of a larger device. For example the communication device may be:
(1) a stand-alone integrated circuit (IC), or chip, or, chip system or subsystem;
(2) a collection having one or more ICs, optionally, the collection of ICs may also include storage components for storing data, computer programs;
(3) ASIC, such as a modem;
(4) a module that may be embedded within other devices;
(5) a receiver, terminal device, smart terminal device, cellular phone, wireless device, handset, mobile unit, in-vehicle device, network device, cloud device, artificial intelligence device, and so on;
(6) Others, etc.

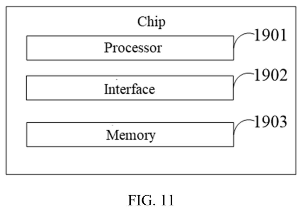

For the case where the communication device may be a chip or a chip system, see the block schematic diagram of the chip illustrated in FIG. 11. The chip illustrated in FIG. 11 includes a processor 1901 and an interface 1902. The number of processors 1901 may be one or more, and the number of interfaces 1902 may be more than one.

Optionally, the chip further includes a memory 1903, and the memory 1903 is configured to store necessary computer programs and data.

A person skilled in the art may also appreciate that the various illustrative logical blocks and steps set forth in embodiments of the present disclosure may be implemented by electronic hardware, computer software, or a combination of both. Whether such a function is realized in hardware or software depends on the specific application and the design requirements of the overall system. For each particular application, a person skilled in the art may use various methods to implement the described function, but such implementations should not be construed as being outside the scope of protection of embodiments of the present disclosure.

The present disclosure also provides a readable storage medium having stored thereon instructions which, when executed by a computer, realize the functions of any of the method embodiments described above.

The present disclosure also provides a computer program product that, when executed by a computer, implements the function of any of the method embodiments described above.

In the above embodiments, this may be accomplished in whole or in part by software, hardware, firmware, or any combination thereof. When implemented using software, it may be implemented in whole or in part as a computer program product. A computer program product includes one or more computer programs. Loading and executing a computer program on a computer produces, in whole or in part, a process or function in accordance with embodiments of the present disclosure. A computer may be a general-purpose computer, a specialized computer, a computer network, or other programmable device. A computer program may be stored in a computer-readable storage medium or transmitted from one computer-readable storage medium to another computer-readable storage medium, e.g., the computer program may be transmitted from one website site, computer, server, or data center to another website site, computer, server, or data center by wired (e.g., coaxial cable, fiber optics, digital subscriber line (DSL)) or wireless (e.g., infrared, wireless, microwave, etc.). A computer-readable storage medium may be any available medium to which a computer has access or a data storage device such as a server, data center, etc. that contains one or more available media integrated. The available media may be magnetic media (e.g., floppy disks, hard disks, tapes), optical media (e.g., high-density digital video discs (DVDs)), or semiconductor media (e.g., solid state disks (SSDs)), among others.

A person skilled in the art may understand that the first, second, and other various numerical numbers involved in the present disclosure are only described for the convenience of differentiation, and are not used to limit the scope of the embodiments of the present disclosure, and also indicate the order of precedence.

The at least one of the present disclosure may also be described as one or more, and the plurality may be two, three, four, or more, without limitation of the present disclosure. In embodiments of the present disclosure, for a type of technical feature, a technical feature of this type is distinguished by "first", "second", "third", "A", "B", "C", and "D", etc., and the technical features described by "first", "second", "third", "A", "B", "C" and "D" are not in any order of priority or magnitude.

As used herein, the terms "machine-readable medium" and "computer-readable medium" refer to any computer program product, device, and/or apparatus (e.g., disk, CD-ROM, memory, programmable logic device (PLD)) used to provide machine instructions and/or data to a programmable processor, memory, programmable logic device (PLD)), including a machine-readable medium that receives machine instructions as machine-readable signals. The term "machine readable signal" refers to any signal used to provide machine instructions and/or data to a programmable processor.

The systems and techniques described herein may be implemented in a computing system that includes a back-end component (e.g., as a data server), or a computing system that includes a middleware component (e.g., an application server), or a computing system that includes a front-end component (e.g., a user's computer that has a graphical user interface or a web browser through which a user can interact with the systems and techniques described herein), or a computing system that includes any combination of such back-end components, middleware components, or front-end components. The components of the system may be interconnected by digital data communication in any form or medium (e.g., a communications network). Examples of communication networks include: local area networks (LANs), wide area networks (WANs), and the Internet.

Computer systems may include clients and servers. Clients and servers are generally far away from each other and usually interact over communication networks. A client-server relationship is created by computer programs that run on corresponding computers and have a client-server relationship with each other.

It should be understood that steps may be reordered, added, or deleted using various forms of the process shown above. For example, the steps recited in the present disclosure may be performed in parallel or sequentially or in a different order, and are not limited herein as long as they are capable of realizing the desired results of the technical solutions disclosed in the present disclosure.

In addition, it should be understood that various embodiments of the present disclosure may be implemented individually or in combination with other embodiments as the solution allows.

A person skilled in the art may realize that the units and algorithmic steps of the various examples described in conjunction with the embodiments disclosed herein are capable of being implemented in electronic hardware, or a combination of computer software and electronic hardware. Whether these functions are performed in hardware or software depends on the specific application and design constraints of the technical solution. A skilled person may use different methods for each particular application to implement the described functionality, but such implementations should not be considered outside the scope of the present disclosure.

It may be clearly understood by a person skilled in the art, for the convenience and brevity of the description, the specific working processes of the above-described systems, apparatuses, and units may be referred to the corresponding processes in the foregoing embodiments of the method, and are not repeated herein.

The above-described are merely specific implementations of the present disclosure, but the protection scope of the present disclosure is not limited to this. The conceivable change or alternative by those skilled in the art within the technical scope disclosed by the present disclosure should be covered in the protection scope of the present disclosure. Therefore, the protection scope of the present disclosure is subject to the protection scope of the claims.

## Claims

1. A communication processing method, comprising:
transmitting an Msg3 carrying first information,
wherein the first information indicates an Msg4 hybrid automatic repeat request-acknowledgment (HARQ-ACK) repetition request or an Msg4 HARQ-ACK repetition capability.

2. The method according to claim 1, wherein the Msg3 does not carry a common control channel (CCCH) service data unit (SDU).

3. The method according to claim 1 or 2, wherein a physical uplink control channel (PUCCH) resource for transmitting the HARQ-ACK is not configured.

4. The method according to any one of claims 1 to 3, wherein a measured downlink reference signal received power (RSRP) is lower than a configured RSRP threshold for Msg4 HARQ-ACK repetition, and the first information carried in the Msg3 indicates the Msg4 HARQ-ACK repetition request.

5. The method according to claim 4, further comprising:
receiving a cell handover command, wherein the cell handover command comprises first configuration information, and the first configuration information indicates an RSRP threshold for the Msg4 HARQ-ACK repetition.

6. The method according to claim 4, further comprising:
receiving first signaling, wherein the first signaling comprises second configuration information, and the second configuration information indicates an RSRP threshold for the Msg4 HARQ-ACK repetition.

7. The method according to claim 4, further comprising:
receiving a system message, wherein the system message comprises third configuration information, and the third configuration information indicates an RSRP threshold for the Msg4 HARQ-ACK repetition.

8. The method according to claim 1, wherein an RSRP threshold for Msg4 HARQ-ACK repetition is not configured, and the Msg3 carries the first information indicating the Msg4 HARQ-ACK repetition capability.

9. The method according to any one of claims 1 to 8, wherein a terminal device is in a radio resource control (RRC) inactive state or an RRC connected state.

10. The method according to claim 9, further comprising:
receiving second signaling, wherein the second signaling comprises second information, and the second information is used to determine whether the terminal device is allowed to indicate the Msg4 HARQ-ACK repetition request.

11. The method according to claim 9, further comprising:
transmitting capability indication information, wherein the capability indication information comprises whether the terminal device supports Msg4 HARQ-ACK repetition.

12. The method according to claim 9, further comprising:
not using the Msg3 to indicate capability information of whether supporting Msg4 HARQ-ACK repetition.

13. The method according to any one of claims 1 to 12, wherein the first information is carried in a cell radio network temporary identifier (C-RNTI) media access control control element (MAC CE) in the Msg3.

14. The method according to claim 13, wherein the first information is carried in an MAC sub-header of the C-RNTI MAC CE.

15. The method according to claim 14, wherein a reserved bit in the MAC sub-header of the C-RNTI MAC CE is used to carry the first information.

16. The method according to claim 14, wherein a logical channel identifier (LCID) in the MAC sub-header of the C-RNTI MAC CE is used to carry the first information.

17. The method according to any one of claims 1 to 16, wherein the method is applied to random access triggered by beam failure recovery (BFR), random access triggered by a scheduling request (SR), random access triggered by small data transmission (SDT) in an inactive state, random access during cell handover, or random access during a secondary cell group (SCG) addition or change procedure.

18. A communication processing method, comprising:
receiving an Msg3 carrying first information,
wherein the first information indicates an Msg4 hybrid automatic repeat request-acknowledgment (HARQ-ACK) repetition request or an Msg4 HARQ-ACK repetition capability.

19. The method according to claim 18, wherein the Msg3 does not carry a common control channel (CCCH) service data unit (SDU).

20. The method according to claim 18 or 19, wherein a physical uplink control channel (PUCCH) resource for transmitting the HARQ-ACK is not configured.

21. The method according to any one of claims 18 to 20, wherein a downlink reference signal received power (RSRP) measured by a terminal device is lower than a configured RSRP threshold for Msg4 HARQ-ACK repetition, and the first information carried in the Msg3 indicates the Msg4 HARQ-ACK repetition request.

22. The method according to claim 21, wherein a cell handover command carries first configuration information, and the first configuration information indicates an RSRP threshold for the Msg4 HARQ-ACK repetition.

23. The method according to claim 21, further comprising:
transmitting first signaling, wherein the first signaling comprises second configuration information, and the second configuration information indicates an RSRP threshold for the Msg4 HARQ-ACK repetition.

24. The method according to claim 21, further comprising:
transmitting a system message, wherein the system message comprises third configuration information, and the third configuration information indicates an RSRP threshold for the Msg4 HARQ-ACK repetition.

25. The method according to claim 18, wherein an RSRP threshold for Msg4 HARQ-ACK repetition is not configured, and the Msg3 carries the first information indicating the Msg4 HARQ-ACK repetition capability.

26. The method according to any one of claims 18 to 25, wherein a terminal device is in a radio resource control (RRC) inactive state or an RRC connected state.

27. The method according to claim 26, further comprising:
transmitting second signaling, wherein the second signaling comprises second information, and the second information is used to determine whether the terminal device is allowed to indicate the Msg4 HARQ-ACK repetition request.

28. The method according to claim 26, further comprising:
receiving capability indication information, wherein the capability indication information comprises whether the terminal device supports Msg4 HARQ-ACK repetition.

29. The method according to claim 26, wherein the terminal device does not use the Msg3 to indicate capability information of whether supporting Msg4 HARQ-ACK repetition.

30. The method according to any one of claims 18 to 29, wherein the first information is carried in a cell radio network temporary identifier (C-RNTI) media access control control element (MAC CE) in the Msg3.

31. The method according to claim 30, wherein the first information is carried in an MAC sub-header of the C-RNTI MAC CE.

32. The method according to claim 31, wherein a reserved bit in the MAC sub-header of the C-RNTI MAC CE is used to carry the first information.

33. The method according to claim 31, wherein a logical channel identifier (LCID) in the MAC sub-header of the C-RNTI MAC CE is used to carry the first information.

34. The method according to any one of claims 18 to 33, wherein the method is applied to random access triggered by beam failure recovery (BFR), random access triggered by a scheduling request (SR), random access triggered by small data transmission (SDT) in an inactive state, random access during cell handover, or random access during a secondary cell group (SCG) addition or change procedure.

35. A communication processing apparatus, comprising:
a first communication module configured to transmit an Msg3 carrying first information, wherein the first information indicates an Msg4 hybrid automatic repeat request-acknowledgment (HARQ-ACK) repetition request or an Msg4 HARQ-ACK repetition capability.

36. A communication processing apparatus, comprising:
a second communication module configured to receive an Msg3 carrying first information, wherein the first information indicates an Msg4 hybrid automatic repeat request-acknowledgment (HARQ-ACK) repetition request or an Msg4 HARQ-ACK repetition capability.

37. A communication processing system, comprising:
a terminal device configured to perform the method according to any one of claims 1 to 17; and
a network device configured to perform the method according to any one of claims 18 to 34.

38. A communication device, comprising: a transceiver, a memory, and a processor connected to the transceiver and the memory, configured to control wireless signal transceiving of the transceiver by executing computer-executable instructions on the memory, and cause the method according to any one of claims 1 to 34 to be implemented.

39. A computer storage medium storing computer executable instructions that when executed by a processor, cause the method according to any one of claims 1 to 34 to be implemented.
